# EUROPEAN PATENT APPLICATION

(11) **EP 1 578 022 A2**
(43) Date of publication of application: **21.09.2005**
(21) Application number: 05251463.5
(22) Date of filing: 10.03.2005
(51) Int. Cl.: H04B 1/10

(54) **Narrow band interference suppressor**

(30) Priority: 15.03.2004 JP 2004073166
(71) Applicant: MOTOROLA, INC., Schaumburg, IL 60096 (US)
(72) Inventor: Nakai, Noriyuki, Yokohama, Kanagawa 226-0026 (JP)
(74) Representative: McLeish, Nicholas Alistair Maxwell

(57) **Abstract**

A compact narrow band interference suppressor. The narrow band interference suppressor includes a plurality of interference signal elimination circuits, a frequency compensation circuit, an AGC amp, and an AD converter that are connected in series. Each interference signal elimination circuit includes a mixer for synthesizing a local oscillation signal of a variable frequency oscillator to eliminate an interference signal with a band elimination filter. The frequency compensation circuit includes a mixer for synthesizing a signal having a frequency generated by the variable frequency oscillator to restore the signal to the frequency band of the signal input to the narrow band interference suppressor by the variable frequency oscillator. The AD converter converts the polarity of the signal in accordance with the number of times the signal passes through the mixer.

Figure 1 accompanies this abstract upon publication.

## Description

### BACKGROUND OF THE INVENTION

The present invention relates to a narrow band interference suppressor for eliminating narrow band interference signals from broadband signals to suppress the effects of interference signals.

Broadband carriers are used in present day wireless communications. It is difficult to allocate continuous frequency bands in such a wireless communication system. Accordingly, this issue is resolved by sharing a narrow band in the same frequency band as narrow band wireless communication or by using divided bands. In this case, however, problems arise when strong narrow band interference signals enter broadband wireless communications. This saturates analog-to-digital converters and deteriorates communication quality.

Accordingly, narrow band interference suppressors for eliminating interference signals included in reception signals have been proposed (refer to Japanese National Phase Paid-Open Patent Publication No. 2002-536905, Figs. 4 through 6). This publication describes a narrow band interference suppressor provided with a detection means, which detects power level, and a plurality of notch modules, which include notch filters (band-elimination filters) for removing interference signals. In this device, a threshold value is determined based on the power level of an input signal detected by the detection means. Further, the frequency of an interference signal is detected based on the threshold values. The notch modules eliminate the detected interference signals. The notch filters remove only signals within a specific narrow frequency band. Accordingly, each notch module includes a first mixer arranged at the input side of the notch filter so that the frequency of an interference signal matches the specific frequency band eliminated by the notch filters. The notch module also includes a second mixer arranged at the output side of the notch filter to restore the signal from which the interference has been removed to the original frequency band. That is, in the narrow band interference suppressor of Japanese National Phase Paid-Open Patent Publication No. 2002-536905, the signal is restored to the same frequency band as the signal initially input to the notch module, and this signal is input to the next notch module.

Narrow band interference suppressors eliminating such an interference signal are required to be miniaturized. However, in the narrow band interference suppressor of Japanese National Phase Paid-Open Patent Publication No. 2002-536905, each notch module is provided with two mixers so that a signal is restored to its initial narrow frequency band before the signal is input in the next notch module. This configuration increases the number of components and makes miniaturization difficult.

### SUMMARY OF THE INVENTION

The present invention provides a narrow band interference suppressor for eliminating an interference signal from a broadband input signal. The narrow band interference suppressor includes a plurality of interference signal elimination means, each including a narrow band signal elimination filter. Each interference signal elimination means synthesizes the input signal and a local oscillation signal to eliminate an interference signal with the narrow band signal elimination filter. The local oscillation signal has a frequency that is calculated and determined based on the frequency of the local oscillation signal that has been synthesized in the interference signal elimination means preceding the interference signal elimination means that is to synthesize the local oscillation signal.

### BRIEF DESCRIPTION OF THE DRAWINGS

Fig. 1 is a block diagram of a narrow band interference suppressor according to a preferred embodiment of the present invention;
Fig. 2 is a schematic diagram showing a signal passing through a mixer of a power measurement circuit in the preferred embodiment;
Fig. 3 is a schematic diagram showing the measurement of the intensity of a signal in the preferred embodiment;
Fig. 4 is a schematic diagram showing the detection of an interference signal with a control circuit in the embodiment;
Fig. 5 is a frequency spectrum diagram showing a process for eliminating one interference signal; and
Fig. 6 is a frequency spectrum diagram showing a process for eliminating two interference signals.

### DETAILED DESCRIPTION OF THE PREFERRED EMBODIMENT

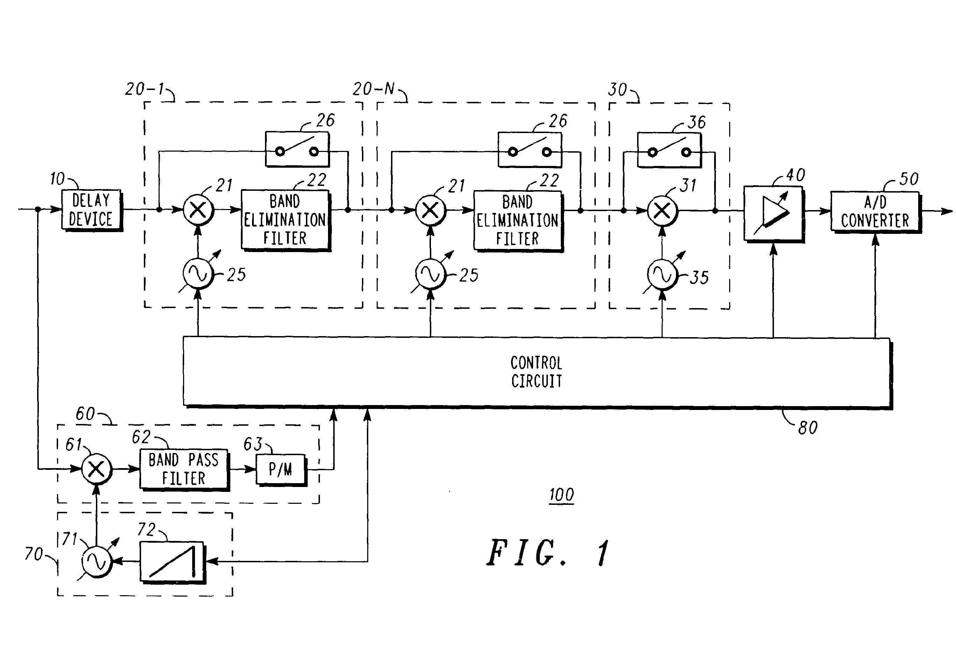

A preferred embodiment of the present invention will now be described with reference to Figs. 1 through 6. The present embodiment is described in terms of eliminating narrow band interference signals included in reception signals (RF signals) of broadband wireless frequencies.

Fig. 1 schematically shows the entire structure of a narrow band interference suppressor 100. As shown in Fig. 1, the narrow band interference suppressor 100 includes a delay device 10, a plurality of interference signal elimination circuits 20-1 to 20-N, a frequency compensation circuit 30, an automatic gain control (AGC) amp 40, and an analog-to-digital (AD) converter 50, which are connected in series and arranged in this order. A known quadrature detector (not shown) is arranged between the frequency compensation circuit 30 and the AGC amp 40. The narrow band interference suppressor 100 also includes a power measurement circuit 60, a frequency sweep circuit 70, and a control circuit 80.

The delay device 10 delays the signal input to the narrow band interference suppressor 100 in accordance with the processing of the control circuit 80 that will be described later.

The interference signal elimination circuits 20-1 to 20-N remove narrow band interference signals. Each of the interference signal elimination circuits 20-1 to 20-N includes a mixer 21, which performs frequency conversion, and a band elimination filter (BEF) 22, which is connected to the mixer 21. The BEF 22 includes a low-pass filter (not shown). Each of the interference signal elimination circuits 20-1 to 20-N also includes with a variable frequency oscillator 25, which is connected to the mixer 21. The variable frequency oscillator 25 generates a local oscillation signal of a frequency determined by the control circuit 80.

The mixer 21 synthesizes the local oscillation signal generated by the variable frequency oscillator 25 with the signal input to each interference signal elimination circuits 20-1 to 20-N. Consequently, the frequency spectrum of the signal input to each interference signal elimination circuit 20-1 to 20-N is converted to a frequency band which is synthesized with the frequency of the local oscillation signal.

The BEF 22 is a filter for eliminating signals of a predetermined narrow frequency range. Therefore, the frequency of an interference signal is matched with the frequency range that can be eliminated by the BEF 22.

The low-pass filter (not shown) transmits only frequencies that are lower than a predetermined frequency and is used to transmit only signals required in subsequent processes.

The interference signal elimination circuits 20-1 to 20-N further include a bypass switch 26. The bypass switch 26 is connected in parallel to the BEF 22. When the bypass switch 26 is turned ON, the signals input to the interference signal elimination circuits 20-1 to 20-N are output through the bypass switch 26 instead of the mixer 21 and the BEF 22.

When the signal output from the final stage interference signal elimination circuit 20-N differs from the frequency band of the reception signal, the frequency compensation circuit 30 restores the signal to the original frequency band. The frequency compensation circuit 30 includes a mixer 31, a low-pass filter (not shown) connected in series with the mixer 31, a variable frequency oscillator 35, and a bypass switch 36. The variable frequency oscillator 35 supplies a predetermined local oscillation signal to the mixer 31. Furthermore, the bypass switch 36 is connected in parallel to the mixer 31 and low-pass filter.

In the same manner as the mixer 21, the mixer 31 synthesizes the signal input to the frequency compensation circuit 30 and the output signal from the variable frequency oscillator 35. The low-pass filter transmits only frequencies lower than a predetermined frequency. The variable frequency oscillator 35 generates a signal of a frequency determined by the control circuit 80. The bypass switch 36 is also controlled by the control circuit 80. The signal input to the frequency compensation circuit 30 is transmitted through the bypass switch 36 instead of the mixer 31 when necessary.

The quadrature detector located at the output side of the frequency compensation circuit 30 is a detection means for separating an in-phase component and a quadrature component from the signal output from the frequency compensation circuit 30. The quadrature detector has a mixer for separating the in-phase component and a mixer for separating the quadrature component. A signal of a predetermined frequency (in the present embodiment, 500 MHz) is added to the mixer for separating the in-phase component. Then, a signal having a phase delayed by 90° from the aforesaid signal is added to the mixer for separating the quadrature component.

The AGC amp 40 is an automatic gain control amplifier capable of varying the amplification factor. The AGC amp 40, which is controlled by the control circuit 80, automatically changes the amplification factor. This substantially regularizes the intensities of the signals output from the AGC amp 40.

The AD converter 50 is an analog-to-digital conversion means for converting analog signals to digital signals. The AD converter 50 executes a polarity reversal process to reverse the polarity of the quadrature component when instructions are received from the control circuit 80.

The power measurement circuit 60 measures the power of the reception signal. The power measurement circuit 60 includes a mixer 61, a bandpass filter 62, and a power meter 63. Signals input to the power measurement circuit 60 are input to the power meter 63 through the mixer 61 and the bandpass filter 62. Then, the power measured by the power meter 63 is supplied to the control circuit 80.

In the mixer 61, a local oscillation signal from the frequency sweep circuit 70 is added to the reception signal input to the narrow band interference suppressor 100. As a result, the frequency band of the reception signal is shifted commensurately with the local oscillation signal.

The bandpass filter 62 only transmits signals within a predetermined frequency band. Therefore, signals of predetermined frequency bands among the signals input to the narrow band interference suppressor 100 are extracted by passing the signals, which have had their frequency gradually shifted in the mixer 61, through the bandpass filter 62.

The power meter 63 measures the intensities of the signals of the predetermined frequencies extracted by the bandpass filter 62 and then provides the measurement result to the control circuit 80.

The frequency sweep circuit 70 provides a signal of a predetermined local oscillation frequency to the mixer 61 of the power measurement circuit 60. The frequency sweep circuit 70 includes a variable frequency oscillator 71 and a sweeper 72. The sweep speed of the sweeper 72 is determined by the control circuit 80. The variable frequency oscillator 71 generates frequency signals, which change continuously in accordance with the sweep speed determined by the sweeper 72. Consequently, continuously changing local oscillation frequency signals are input to the mixer 61.

As described above, the control circuit 80 entirely controls the narrow band interference suppressor 100. Specifically, the control circuit 80 controls the frequency sweep circuit 70. Further, the control circuit 80 controls the interference signal elimination circuits 20-1 to 20-N, the frequency compensation circuit 30, the AGC amp 40, and the AD converter 50 based on the signal intensity from the power measurement circuit 60.

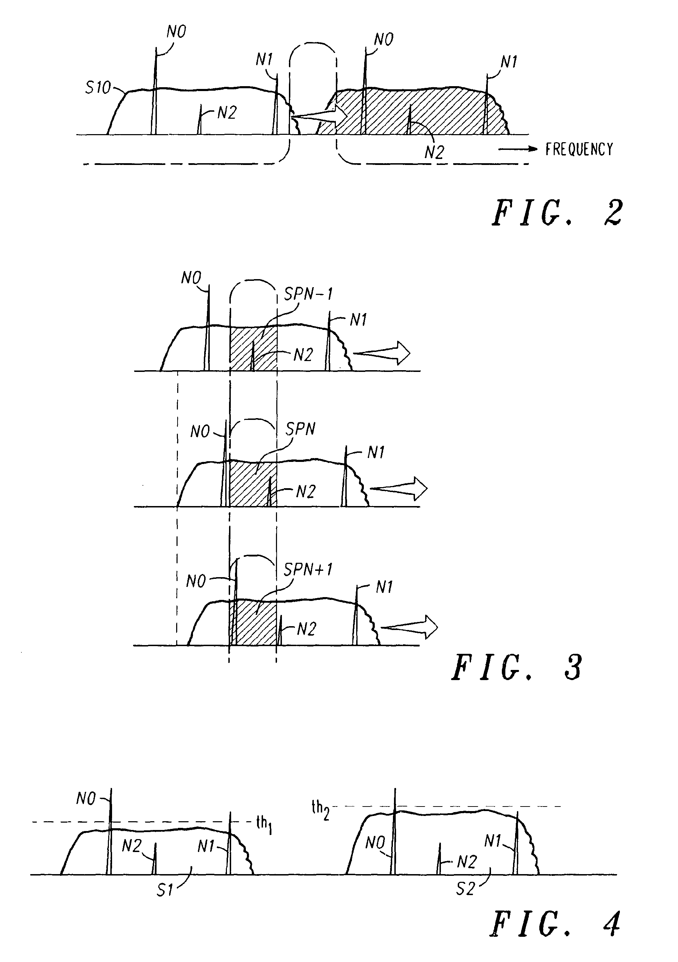

The operation of the narrow band interference suppressor 100 will now be described with reference to Figs. 2 through 6.

### Interference Signal Frequency Determination

The following discussion hypothesizes that a reception signal S10 shown in Fig. 2 is input to the narrow band interference suppressor 100. The reception signal S10 includes interference signals N0, N1, and N2.

As shown in Fig. 1, when the signal is input to the narrow band interference suppressor 100, first, the control circuit 80 checks the signal reception through the power measurement circuit 60. Then, the control circuit 80 generates a local oscillation signal having a frequency which continuously changes at a predetermined sweep speed. In the present embodiment, the control circuit 80 controls the variable frequency oscillator 71 so as to generate local oscillation signals which have gradually increasing frequencies.

The local oscillation signal generated by the variable frequency oscillator 71 is synthesized with the reception signal S10 in the mixer 61. Consequently, the frequency spectrum of the reception signal S10 is shifted gradually to high frequencies.

At this time, the signal output from the mixer 61 passes through the bandpass filter 62. The frequency characteristic of the bandpass filter 62 is indicated by the broken lines in Figs. 2 and 3. Referring to Fig. 3, the bandpass filter 62 sequentially cuts out partial spectrums (SPN-1, SPN, SPN+1) from the reception signal S10 as time elapses. Although only partial spectrums (SPN-1, SPN, SPN+1) are cut out in this example, in practice, all necessary frequency bands are cut out.

Then, the power meter 63 sequentially measures the power intensities of the partial spectrums (SPN-1, SPN, SPN+1), and provides the power intensities to the control circuit 80.

The control circuit 80 calculates the average value of the received power intensities, and determines a threshold value based on the average value. In the present embodiment, the control circuit 80 multiplies the average value by a predetermined percentage to obtain the threshold value.

Next, the control circuit 80 specifies the frequency of the interference signals that are to be eliminated. Specifically, based on the power intensity measured by the power meter 63, the control circuit 80 specifies the intensity of the reception signal S10 in which the frequency band becomes greater than or equal to the threshold value. Then, the control circuit 80 detects, as an interference signal, the frequency band in which the power intensity is greater than or equal to the threshold value.

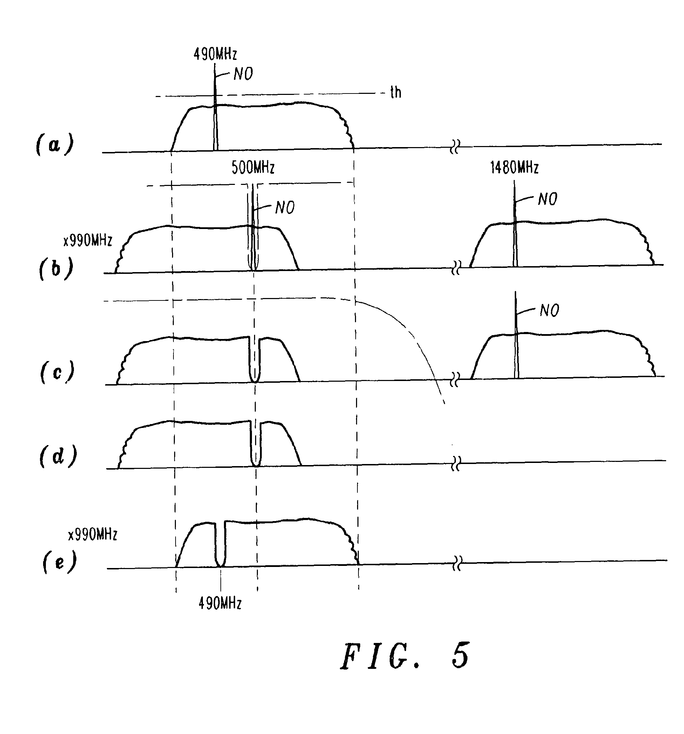

The control circuit 80 determines the threshold value based on the average value of the power intensity of the reception signal S10. Thus, in some cases an interference signal may be detected while in other cases an interference signal having the same power intensity may not be detected. Specifically, when the control circuit 80 sets a threshold value th1 for a signal S1, as shown in Fig. 4, interference signal N1 is detected in addition to interference signal N0. However, the interference signal N1 is not detected when the control circuit 80 sets a threshold value th2 for a signal S2, which has greater average reception power intensity.

### Setting the Interference Signal Elimination Circuits 20-1 to 20-N

Next, the control circuit 80 controls the variable frequency oscillator 25 and bypass switch 26. When the number of interference signals that are to be eliminated is less than the number of interference signal elimination circuits 20-1 to 20-N, the control circuit 80 operates only the same number of variable frequency oscillators 25 as the interference signals. Then, the bypass switches 26 of the other interference signal elimination circuits are turned ON. When a plurality of interference signals are detected, the control circuit 80 controls the interference signal elimination circuits 20-1 to 20-N so as to eliminate the interference signals in sequence of the intensity starting with the strongest interference signal.

The control circuit 80 determines the frequencies which require interference signal elimination. Then, the control circuit 80 instructs the interference signal elimination circuits that are to eliminate interference signals to generate the determined frequencies. Specifically, the control circuit 80 calculates the frequency necessary to match the frequency of the interference signal with the frequency that can be eliminated by the BEF 22. At this time, the control circuit 80 does not determine the frequencies generated in the variable frequency oscillator 25 based on the frequency band of the reception signal. Rather, the control circuit 80 determines the frequencies generated in the variable frequency oscillator 25 based on the frequency bands of the signals input to the interference signal elimination circuits 20-1 to 20-N, which include the variable frequency oscillators 25. Details will be described later using specific examples.

### Setting the Frequency Compensation Circuit 30 and AGC Amp 40

Next, the control circuit 80 determines the frequency that is to be generated by the variable frequency oscillator 35 of the frequency compensation circuit 30. Specifically, the control circuit calculates the deviation of the frequency spectrum of the signal output from the final interference signal elimination circuit 20-N relative to the frequency spectrum of the reception signal input to the narrow band interference suppressor 100. Then, the control circuit 80 calculates the frequency that compensates for the deviation. The control circuit 80 controls the variable frequency oscillator 35 so as to generate a signal of the calculated frequency.

The control circuit 80 sets the amplification factor of the AGC amp 40 in accordance with the average value of the calculated power intensity.

### Setting the AD Converter

The control circuit 80 determines whether or not the frequency spectrum of the signal output from the frequency compensation circuit 30 is reversed relative to the frequency spectrum of the signal input to the narrow band interference suppressor 100 based on the controls of the variable frequency oscillator 25 and the variable frequency oscillator 35. Specifically, the control circuit 80 determines that the polarity of the AD converter 50 is to be reversed when the signal input to the narrow band interference suppressor 100 passes through the mixers 21 and 31 an odd number of times. When the control circuit 80 determines that the polarity has been reversed, the control circuit 80 controls the AD converter 50 and reverses the polarity.

### Operation of the Interference Signal Elimination Circuit 20-1 to the AD Converter 50

In the above-described manner, the control circuit 80 completes the settings of the frequency sweep circuit 70, the power measurement circuit 60, the interference signal elimination circuits 20-1 to 20-N, the frequency compensation circuit 30, the AGC amp 40, and the AD converter 50. Thereafter, the reception signal input to the narrow band interference suppressor 100 is transmitted via the delay device 10 to the interference signal elimination circuits 20-1 to 20-N, the frequency compensation circuit 30, the AGC amp 40, and the AD converter 50.

In the interference signal elimination circuits 20-1 to 20-N, a local oscillation signal generated from the variable frequency oscillator 25 is synthesized in the mixer 31. This matches the frequency of an interference signal with a frequency that can be eliminated by the BEF 22. Furthermore, when elimination is unnecessary, the bypass switch 26 is turned ON, and the signal input to the interference signal elimination circuit is directly output.

Further, when the frequency band of the signal output from the interference signal elimination circuit 20-N is the same as the frequency band of the reception signal input to the narrow band interference suppressor 100, the bypass switch 36 is turned ON, and the signal input to the frequency compensation circuit 30 is directly output.

When the frequency band of the signal output from the interference signal elimination circuit 20-N is different from the frequency band of the reception signal input to the narrow band interference suppressor 100, a local oscillation signal from the variable frequency oscillator 35 is supplied to the mixer 31. In this case, a local oscillation signal having a frequency that obtains the frequency band of the reception signal is used.

The signal output from the frequency compensation circuit 30 is amplified to a predetermined magnitude in the AGC amp 40, subjected to analog-to-digital conversion in the AD converter 50, and then output from the narrow band interference suppressor 100.

Specific examples will now be described with reference to Fig. 5. A BEF for eliminating frequencies in a narrow band in the vicinity of 500 MHz is used in the following examples as each of the BEFs 22.

Fig. 5(a) shows a case in which the received signal includes interference signal N0 in the vicinity of 490 MHz. First, the control circuit 80 sets the control conditions of the interference signal elimination circuits 20-1 to 20-N, the frequency compensation circuit 30, the AGC amp 40, and the AD converter 50.

When the signal shown Fig. 5(a) is input to the narrow band interference suppressor 100, the control circuit 80 detects the presence of the interference signal N0 at 490 MHz with the power measurement circuit 60.

Thus, the control circuit 80 first determines the interference signal elimination circuits 20-1 to 20-N that are to eliminate the interference signal. In this case, since there is only one detected interference signal, the interference signal elimination circuit 20-1 is used to eliminate the interference signal. Accordingly, the bypass switches 26 are turned ON for the other interference signal elimination circuits 20-2 to 20-N.

Next, the control circuit 80 determines the frequency that is to be generated by the variable frequency oscillator 25 of the interference signal elimination circuit 20-1. The control circuit 80 obtains the absolute value calculated by adding 500 MHZ to 490 MHz or subtracting 490 MHz from 500 MHZ, that is, |500-490| = 10 MHz and |500+490| = 990 MHz. The control circuit 80 determines that the larger calculated absolute value will be used as the frequency used in the interference signal elimination circuit 20-1. Consequently, the control circuit 80 determines that 990 MHz will be used as the frequency and accordingly sets the variable frequency oscillator 25 of the interference signal elimination circuit 20-1.

Next, the control circuit 80 sets the variable frequency oscillator 35 of the frequency compensation circuit 30. In the present embodiment, a deviation of 10 MHz from the reception signal occurs in the interference signal elimination circuit 20-1. Therefore, the control circuit 80 sets the variable frequency oscillator 35 so as to have the same frequency band as the reception signal in the variable frequency oscillator 35. Specifically, the control circuit 80 calculates the values obtained by adding 490 MHz to 500 MH and subtracting 490 MHz from 500 MHZ (490-500 = -10 and 490+500 = 990). Then, the control circuit 80 generates a signal having a frequency of the larger absolute value, that is, the frequency of the addition value (990 MHz).

Then, the control circuit 80 sets the amplification factor of the AGC amp 40. In the present embodiment, the amplification factor is determined based on the average power intensity of the reception signal.

Finally, the control circuit 80 sets the AD converter 50. Specifically, in this example, the signal input to the narrow band interference suppressor 100 passes through the mixer 21 of the interference signal elimination circuit 20-1 and the mixer 31 of the frequency compensation circuit 30. That is, since the reception signal passes through an even number of mixers, the control circuit 80 sets the AD converter 50 for non-reverse polarity. The control circuit 80 ends the above settings within the delay time of the delay device 10.

Changes in the signal of Fig. 5(a) that is input to the interference signal elimination circuit 20-1 will now be described. The reception signal input to the interference signal elimination circuit 20-1 is synthesized to the signal of 990 MHz in the mixer 21. As a result, referring to Fig. 5(b), the interference signal N0 of 490 MHz is shifted to 500 (990-490) MHz, and the frequency of the interference signal N0 is shifted to 1480 (990+490) MHz. The synthesized signal including the interference signal N0 at 500 MHz has a reversed spectrum contour.

The synthesized signal passes through the BEF 22 of the interference signal elimination circuit 20-1. This obtains a signal from which the narrow band signal at 500 MHz is removed, as shown in Fig. 5(c).

Further, the signal passes through the low-pass filter of the interference signal elimination circuit 20-1. This eliminates the high frequency. Specifically, a signal having an interference frequency of 1480 MHz is eliminated. Accordingly, the signal output from the interference signal elimination circuit 20-1 is a signal from which the narrow band frequency signal has been eliminated, as shown in Fig. 5(d).

When this signal is output from the interference signal elimination circuit 20-1, it passes through the bypass switch 26 of each of the interference signal elimination circuits 20-2 to 20-N and is input to the frequency compensation circuit 30.

The variable frequency oscillator 35 of the frequency compensation circuit 30 generates a local oscillation signal of 990 MHz by means of the setting of the control circuit 80. The local oscillation signal is synthesized with the input signal in the mixer 31. Therefore, the frequency spectrum of the signal output from the frequency compensation circuit 30 is identical to that of the frequency band of the reception signal input to the narrow band interference suppressor 100, as shown in Fig. 5(e). In this case, since the signals synthesized in the mixers 21 and 31 are an even number, the frequency spectrum of the signal output from the frequency compensation circuit 30 is not reversed relative to the reception signal.

Then, the quadrature detector separates the in-phase component and quadrature component of the signal output from the frequency compensation circuit 30. The signal is then input to the AGC amp 40. The AGC amp 40 regulates the amplification factor based on the setting by the control circuit 80.

Finally, the signal output from the frequency compensation circuit 30 is input to the AD converter 50, and the quadrature component is converted to a digital signal without the polarity being reversed. The signal from the AD converter 50 is output as the signal of the narrow band interference suppressor 100 with the interference signal eliminated.

When the reception signal includes one 500 MHz interference signal N0 having the same narrow band frequency as that eliminated by the BEF 22, the same process as that for the 490 MHz interference signal is executed. Specifically, a 1000 MHz local oscillation signal is generated by the variable frequency oscillator 25. Then, after the interference signal N0 is removed in the interference signal elimination circuit 20-1, the synthesized signal is restored to the original frequency band in the frequency compensation circuit 30. This signal is output via the AGC amp 40 and AD converter 50 as the signal of the narrow band interference suppressor 100.

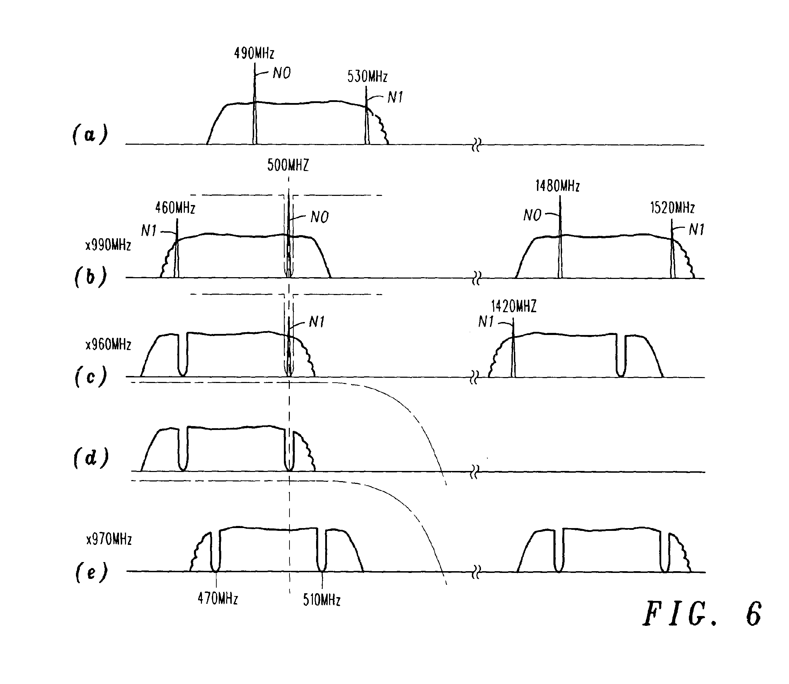

A case in which a received signal includes an interference signal N0 in the vicinity of 490 MHz and an interference signal N1 in the vicinity of 530 MHz, as shown in Fig. 6(a) of, will now be describe. First, the control circuit 80 sets the control conditions of the interference signal elimination circuits 20-1 to 20-N, the frequency compensation circuit 30, the AGC amp 40, and the AD converter 50.

When the signal shown in Fig. 6(a) is input to the narrow band interference suppressor 100, the control circuit 80 detects the presence of the interference signal N0 at 490 MHz and the interference signal N1 at 530 MHz with the power measurement circuit 60.

Thus, the control circuit 80 first determines the interference signal elimination circuits 20-1 to 20-N that are to eliminate the interference signals. At this time, since there are two detected interference signals, the interference signal elimination circuit 20-1 and 20-2 are used to eliminate the interference signals. Accordingly, the bypass switches 26 are turned ON for the other interference signal elimination circuits 20-3 to 20-N.

Next, the control circuit 80 determines the frequency that is to be generated by the variable frequency oscillator 25 of the interference signal elimination circuit 20-1. Specifically, the control circuit 80 determines to generate a frequency of 990 MHZ in the same manner as the first example in order to eliminate the interference signal N0 with a frequency of 490 MHz which has the greatest reception intensity.

Then, the control circuit 80 determines the frequency that is to be generated by the variable frequency oscillator 25 of the interference signal elimination circuit 20-2. Specifically, the interference signal with the next greatest intensity has a frequency of 530 MHz. To eliminate this interference signal, the control circuit 80 calculates the frequency for adjusting the frequency of the interference signal to 500 MHz. At this time, the original frequency (490 MHz) of the interference signal N0 becomes 500 MHz and the signal is converted so as to reverse the frequency spectrum contour in the interference signal elimination circuit 20-1. Accordingly, the 530 MHz interference signal N1 in the reception signal is converted to 460 MHz when output from the interference signal elimination circuit 20-1. Thus, the control circuit 80 calculates the frequency for matching 460 MHz with 500 MHz. That is, values are calculated by adding 500 MHz to 460 MHz or by subtracting 460 MHz from 500 MHz to obtain 40 MHz and 960 MHz. Then, the control circuit 80 determines that the value having the greatest absolute value among the calculated values will be set as the frequency to be generated. Thus, the control circuit 80 determines that 960 MHz will be used as the frequency, and sets this value for the variable frequency oscillator 25 of the interference signal elimination circuit 20-2.

Then, the control circuit 80 sets the variable frequency oscillator 35 of the frequency compensation circuit 30. In the present embodiment, 990 MHz, which is generated by the variable frequency oscillator 25 of the interference signal elimination circuit 20-1 is subtracted. Further, 960 MHz generated by the variable frequency oscillator 25 of the interference signal elimination circuit 20-2 is subtracted. Therefore, the section corresponding to 500 MHz of the reception signal is converted to 470 MHz. The control circuit 80 calculates values by adding or subtracting 500 MHZ and 470 MHz (470-500=-30, 470+500=970), and determines the frequency having the greatest absolute value among these values (970 MHz). Then, the control circuit 80 sets the variable frequency oscillator 35 such that the variable frequency oscillator 35 is in the same frequency band as the reception signal. Specifically, the variable frequency oscillator 35 is controlled so as to generate a signal at the determined 970 MHz.

The control circuit 80 determines the amplification factor for the AGC amp 40 and sets the AD converter 50. In this example, the signal input to the narrow band interference suppressor 100 passes through the mixer 21 of the interference signal elimination circuit 20-1 and the mixer 31 of the frequency compensation circuit 30. That is, since the signal passes through the mixers 21 and 31 an odd number of times, the control circuit 80 sets the AD converter 50 to perform a polarity reversal process.

The control circuit 80 ends the above settings within the delay time of the delay device 10.

Changes in the signal shown in Fig. 6(a) and input to the interference signal elimination circuit 20-1 will now be described. The reception signal input to the interference signal elimination circuit 20-1 is synthesized with the 990 MHz signal in the mixer 21. This shifts the 490 MHz interference signal N0 to 500 MHz and 1480 MHz, as shown in Fig. 6(b). The synthesized signal including the interference signal N0 at 500 MHz has a reversed spectrum contour. By passing through the BEF 22 of the interference signal elimination circuit 20-1, the 500 MHz interference signal N0 is eliminated from the synthesized signal. Further, by passing through the low-pass filter of the interference signal elimination circuit 20-1, the 1480 MHz interference signal N0 is eliminated from the synthesized signal. Accordingly, the signal output from the interference signal elimination circuit 20-1 sits in the vicinity of 500 MHz and becomes a signal from which the frequency signal in the narrow 500 MHz band has been eliminated.

The signal output from the interference signal elimination circuit 20-1 is input to the interference signal elimination circuit 20-2. Then, a 960 MHz signal is synthesized in the mixer 21 of the interference signal elimination circuit 20-2. Consequently, the interference signal N1 shifts to 500 MHz and the frequency of interference signal N1 shifts to 1420 MHz, as shown in Fig. 6(c). The synthesized signal including the 500 MHz interference signal has a reversed spectrum contour relative to the signal output from the interference signal elimination circuit 20-1, that is, the same spectrum contour as the reception signal.

When this signal passes through the BEF 22 of the interference signal elimination circuit 20-2, the signal in the vicinity of 500 MHz including the interference signal N1 is eliminated. Then, this signal passes through the low-pass filter of the interference signal elimination circuit 20-2. This eliminates the signal containing the 1420 MHz interference signal. Accordingly, the signal output from the interference signal elimination circuit 20-2 is a signal from which the 500 MHZ narrow band frequency signal has been eliminated, as shown in Fig. 6(d).

The signal output from the interference signal elimination circuit 20-2 passes through the bypass switches 26 of the interference signal elimination circuits 20-3 to 20-N and is input to the frequency compensation circuit 30.

A 970 MHz local oscillation signal is generated in the variable frequency oscillator 35 of the frequency compensation circuit 30. The local oscillation signal is synthesized with the signal input to the mixer 31. Therefore, the frequency spectrum of the signal output from the frequency compensation circuit 30 is identical to the frequency band of the reception signal, as shown in Fig. 6(e). However, in this state, since the frequencies are synthesized an odd number of times in the mixers 21 and 31, the frequency spectrum of the signal output from the frequency compensation circuit 30 has a reversed contour relative to the frequency of the signal input to the frequency compensation circuit 30, that is, a reversed contour relative to the frequency spectrum of the reception signal shown in Fig. 6(a).

The signal output from the frequency compensation circuit 30 is input to the AD converter 50 via the quadrature detector and the AGC amp 40. In the AD converter 50, the quadrature component is subjected to polarity inversion and converted to a digital signal. The signal output from the AD converter 50 is output from the narrow band interference suppressor 100 as a signal from which the interference signals N0 and N1 have been removed.

When Interference Signal N0 In the Vicinity of 490 MHz and Interference Signal In the Vicinity of 500 MHz are Included

A case in which the interference signal N1 of 530 MHz described above is 500 MHz will now be described. In this case, the control circuit 80 generates a 990 MHz signal in the variable frequency oscillator 25 of the interference signal elimination circuit 20-1 and generates a 990 MHz signal in the variable frequency oscillator 25 of the interference signal elimination circuit 20-2. When doing so, the synthesized signal that has passed through the mixer 21 of the interference signal elimination circuit 20-2 is restored to the frequency band of the reception signal. Therefore, the control circuit 80 sets the bypass switch 36 to ON in the frequency compensation circuit 30. Since the reception signal passes through the mixers 21 of the interference signal elimination circuits 20-1 and 20-2 only twice, the frequency spectrum of the signal output from the frequency compensation circuit 30 is not reversed relative to the reception signal. Therefore, the control circuit 80 sets the AD converter 50 so as not to reverse the polarity since the signal passes through the mixers 21 an even number of times.

Accordingly, in this case, the reception signal has the 490 MHz interference signal N0 eliminated by passing through the interference signal elimination circuit 20-1 and thereafter has the 500 MHz interference signal N1 eliminated by passing through the interference signal elimination circuit 20-2. Then, the signal passes through the bypass switch 36 and is converted to a digital signal without undergoing polarity reversal in the AD converter 50. Consequently, a signal from which the interference signals N0 and N1 have been eliminated is output from the narrow band interference suppressor 100.

In the present embodiment, the narrow band interference suppressor 100 includes the interference signal elimination circuits 20-1 to 20-N and the frequency compensation circuit 30. The interference signal elimination circuits 20-1 to 20-N each have a mixer 21 for synthesizing local oscillation signals matched with the interference signals N0 and N1 at narrow band frequencies that are to be eliminated by the BEF 22. The frequency compensation circuit 30 has a mixer 31 for synthesizing the local oscillation signal to restore the signal to the frequency band of the reception signal. Therefore, the signal does not have to be restored to the frequency band of the reception signal in the interference signal elimination circuits 20-1 to 20-N. Accordingly, unlike the prior art, mixers for restoring the signal to the frequency band of the signal input to the interference signal elimination circuits 20-1 to 20-N are unnecessary at the output side of the BEF 22 of each interference signal elimination circuit 20-1 to 20-N. The interference signal elimination circuits 20-1 to 20-N thus reduce the number of components in comparison with the prior art. Moreover, the narrow band interference suppressor 100, which includes the interference signal elimination circuits 20-1 to 20-N, may be miniaturized and interference signal may be eliminated at high speeds.

In the present embodiment, the control circuit 80 generates, in the variable frequency oscillators 25 and 35, a signal of a frequency having the greatest absolute value among frequencies matching the narrow band eliminated by the BEF 22. Therefore, even though two frequency spectrums are generated when the mixers 21 and 31 synthesize signals, they are discretely generated. Accordingly, the low-pass filter provided in the interference signal elimination circuits 20-1 to 20-N and the frequency compensation circuit 30 extracted only the signals of the necessary frequency spectrums.

In the present embodiment, the polarity of the frequency spectrum is reversed with each pass whenever passing through the mixers 21 and 31. Therefore, when the control circuit 80 determines that the signal passes an odd number of times through the mixers 21 and 31, the polarity of the AD converter 50 is reversed. Since, after passing an odd number of times through the mixers 21 and 31, the frequency spectrum of the signal is reversed relative to the frequency spectrum of the signal input to the narrow band interference suppressor 100, a signal of the correct polarity is retrieved by reversing polarity in the AD converter 50.

In the present embodiment, the delay device 10 is arranged at the input side of the interference signal elimination circuit 20-1. Therefore, after the control circuit 80 determines the frequency that is to be generated by each variable frequency oscillator 25 and 35 based on the detected frequencies of the interference signals N0 and N1, the input signal is input to the interference signal elimination circuit 20-1. Accordingly, the narrow band interference suppressor 100 eliminates the interference signals N0 and N1 from the input signal based on further accurate settings of the control circuit 80.

In the present embodiment, the bypass switch 26 is arranged in parallel to the BEF 22 and mixer 21 in each of the interference signal elimination circuits 20-1 to 20-N. When a signal is not synthesized in the mixer 21, the bypass switch 26 is turned ON, and the signal does not pass through the mixer 21 and BEF 22. Thus, when the interference signals included in the input signal are less than N, the acquired signal passes only through the same number of BEFs 22 as the interference signals.

In the present embodiment, as shown in Fig. 3, the control circuit 80 continuously measures the signal intensity of the frequency spectrum of signals input to the narrow band interference suppressor 100, for example, sections SPN-1, SPN, SPN+1, and calculates the frequencies of the interference signals N0 and N1. Accordingly the frequencies of the interference signals N0 and N1, are accurately detected. Therefore, the control circuit 80 accurately eliminates the interference signals N0 and N1.

In the present embodiment, the control circuit 80 calculates a threshold value based on the signal intensity measured by the power measurement circuit 60, and detects the frequencies of interference signals by comparison with this threshold value. Therefore, interference signals are detected in accordance with the signal intensity, and interference signals are efficiently eliminated.

In the present embodiment, when detecting a plurality of interference signals N0 and N1, the control circuit 80 controls the interference signal elimination circuits 20-1 to 20-N so as to first remove the strongest interference signal N0 among the interference signals N0 and N1. That is, the number of interference signal elimination circuits 20-1 to 20-N is minimized by eliminating the interference signals N0 and N1 from the strongest one. This enables miniaturization and reduces power consumption.

In the present embodiment, the AGC amplifier 40 is arranged at the output side of the narrow band signal elimination circuit. Therefore, the intensities of the signals output from the narrow band interference suppressor 100 are substantially the same even when the interference signal elimination circuits 20-1 to 20-N output signals having different intensities.

In the present embodiment, a quadrature detector for separating in-phase and quadrature components from a signal is arranged between the frequency compensation circuit 30 and the AGC amp 40. When information for demodulation is superimposed with the ratio of the signal intensities of the in-phase component and the quadrature component, there may be variations in the difference between during the separation due to deterioration of the demodulation characteristics. However, in the present embodiment, the in-phase component and quadrature component signals separated by the quadrature detector pass through the AGC amp 40. Thus, the gain of the in-phase component and quadrature component may be adjusted by the AGC amp 40. Accordingly, the gains of the in-phase component and the quadrature component are adjusted even when the information for demodulation is superimposed with the ratio of the signal intensities of the in-phase component and quadrature component. Further, more accurate information is obtained.

It should be apparent to those skilled in the art that the present invention may be embodied in many other specific forms without departing from the spirit or scope of the invention. Particularly, it should be understood that the present invention may be embodied in the following forms.

In the above embodiment, the frequency compensation circuit 30 is arranged between the interference signal elimination circuit 20-N and the AGC amp 40. Alternatively, the frequency compensation circuit 30 may be arranged at the output side of the AGC amp 40. In this case, the control circuit 80 controls polarity reversion in the AD converter 50 in accordance with whether a signal passes through the mixer 31 or the bypass switch 36 in the frequency compensation circuit 30.

In the above embodiment the delay device 10 is arranged at the input side of the interference signal elimination circuit 20-1. Alternatively, the delay device 10 may be omitted when the narrow band interference suppressor 100 is used in system having a large tolerance with respect to narrow band interference signals. This further reduces the number of components.

A bypass switch may be arranged parallel to the delay device 10. The bypass switch is turned on and off so that a signal passes through or does not pass through the delay device 10. In this case, when there is a narrow band interference signal but there is no change in the frequency arrangement, the power measurement circuit 60 may be stopped for a certain period. This saves power.

In the above embodiment, when a reception signal includes only a 500 MHz interference signal N0, the frequency band is converted in the mixer 21 of the interference signal elimination circuit 20-1 in the same manner as the other frequencies. Then, the frequency band is restored to that of the reception signal in the frequency compensation circuit 30. Alternatively, the BEF 22 in the frequency compensation circuit 30 may be arranged parallel to the bypass switch 26. In this case, when the reception signal includes the 500 MHz interference signal N0, the reception signal passes through the BEF 22 of the frequency compensation circuit 30. As a result, the interference signal N0 may be eliminated without generating local oscillation signals from the variable frequency oscillator and variable frequency oscillator 35. This reduces power consumption.

In the above embodiment, the control circuit 80 gradually shifts the reception signal S10 to a higher frequency by gradually increasing the local oscillation signal generated by the variable frequency oscillator 71 in order to calculate the frequencies of the interference signals. The present invention is not limited such configuration, and the control circuit 80 may change the local oscillation signal generated by the variable frequency oscillator 71 in any matter as long as the frequency of the interference signal can be calculated. For example, the local oscillation signal generated by the variable frequency oscillator 71 may be gradually decreased so as to gradually shift the reception signal S10 to a lower frequency. Furthermore, an initial value for the frequency of the local oscillation signal that is first generated may be set. In this case, the frequency of the local oscillation signal is changed by gradually increasing the frequency from the initial value and then gradually increasing the frequency from a low frequency to the initial value.

In the above embodiment, as shown in Fig. 3, the control circuit 80 divides the frequency spectrum of the signal input to the narrow band interference suppressor 100 into consecutive sections SPN-1, SPN, SPN+1, measures the signal intensity of SPN-1, SPN, SPN+1, and calculates the frequencies of the interference signals. However, the present invention is not limited to such configuration. For example, part of an input signal may be discretely extracted, and the frequency of the interference signal may be calculated from this result. In this case, the interference signal frequency detection accuracy falls. However, the measurement is performed at a high speed. Thus, interference signals are eliminated with high sensitivity.

In the above embodiment, a low-pass filter (not shown) is arranged at the output side of the BEF 22 in each of the interference signal elimination circuits 20-1 to 20-N. Alternatively, the low-pass filter may be arranged between the input side of the BEF 22 and the output side of the mixer 21.

In the above embodiment, the narrow band interference suppressor 100 is described using broadband radio frequencies (RF). However, the signal from which interference is eliminated is not limited to RF signals. For example, interference signals may be eliminated from intermediate frequency signals.

In the above embodiment, the quadrature detector for separating the in-phase component and quadrature component from a signal is arranged between the frequency compensation circuit 30 and AGC amp 40. Alternatively, the quadrature detector may be arranged between the AGC amp 40 and the AD converter 50. When the quadrature detector is arranged before the AGC amp 40, it becomes difficult to obtain the same gain when the in-phase component of the signal passes through the AGC amp 40 and the quadrature component of the signal passes through the AGC amp 40. In this case, if the quadrature detector is arranged after the AGC amp 40, adjustments can be made so that the same gain is obtained by the in-phase component and the quadrature component in the AGC amp 40.

In the above embodiment, the polarity of the quadrature component is reversed in the AD converter 50. However, the polarity reversal process is not limited to such configuration. For example, an analog amplifier may be arranged at the input side of the AD converter 50 so that the analog amplifier cooperates with the AD converter 50 to reverse the polarity of the quadrature component. The AGC amp 40 may also be used as an analog amplifier at the input side of the AD converter 50. In this case, although the number of components increases, the polarity of the quadrature component is reversed by the cooperation between the AGC amp 40 and the AD converter 50.

In the above embodiment, the polarity of the quadrature component is reversed. Alternatively, the polarity of the in-phase component may be reversed, and a signal may also be reversed so as to have the same spectrum as the frequency spectrum of the input signal. Examples of wireless systems using orthogonal modulation represented by in-phase component and quadrature components include portable telephone services, such as CDMA (e.g., CDMA1x and W-CDMA), iDEN, PDC, and PHS, and digital television systems using orthogonal frequency division multiplex (OFDM).

The present examples and embodiments are to be considered as illustrative and not restrictive, and the invention is not to be limited to the details given herein, but may be modified within the scope and equivalence of the appended claims.

## Claims

1. A narrow band interference suppressor for eliminating an interference signal from a broadband input signal, the narrow band interference suppressor comprising:
a plurality of interference signal elimination means, each including a narrow band signal elimination filter, each interference signal elimination means synthesizing the input signal and a local oscillation signal to eliminate an interference signal with the narrow band signal elimination filter, wherein the local oscillation signal has a frequency that is calculated and determined based on the frequency of the local oscillation signal that has been synthesized in the interference signal elimination means preceding the interference signal elimination means that is to synthesize the local oscillation signal.

2. The narrow band interference suppressor according to claim 1, further comprising:
a compensation means, located at an output side of the final interference signal elimination means, for synthesizing the local oscillation signal to match the frequency band of an output signal of the narrow band interference suppressor to the frequency band of the broadband input signal, wherein the compensation means synthesizes a local oscillation signal having a frequency determined based on the frequency of the local oscillation signal synthesized in each interference signal elimination means.

3. The narrow band interference suppressor according to claim 2, wherein each interference signal elimination means includes a variable frequency oscillation means for generating a local oscillation signal, the narrow band interference suppressor further comprising:
a control means for determining the frequency of the local oscillation signal of the variable frequency oscillation means, wherein the control means:
specifies the frequency of an interference signal included in the broadband input signal;
calculates the frequency of the interference signal when the frequency of the interference signal is synthesized with the local oscillation signal in the preceding interference signal elimination means and input to the variable frequency oscillation means; and
generates a frequency, obtained by adding the frequency to a frequency of a signal that can be eliminated by the narrow band signal elimination filter, in the variable frequency oscillation means of the interference signal elimination means.

4. The narrow band interference suppressor according to claim 3, wherein the input signal includes an in-phase component and a quadrature component, the narrow band interference suppressor further comprising:
a detection means, located at the output side of the final interference signal elimination means, for separating the in-phase component and the quadrature component from the input signal; and
an analog-to-digital conversion means for converting an analog signal to a digital signal, wherein the analog-to-digital conversion means reverses polarity of one of the in-phase component and the quadrature component when the local oscillation signal is synthesized an odd number of times in the interference signal elimination means and the compensation means.

5. The narrow band interference suppressor according to any one of claims 1 to 4, further comprising:
a delay means located at the input side of the first stage interference signal elimination means, wherein the delay means has a delay time that is longer than the time necessary for the control means to determine the frequency of the local oscillation signal synthesized in the interference signal elimination means and output the local oscillation signal having this frequency.

6. The narrow band interference suppressor according to any one of claims 1 to 5, further comprising:
an automatic gain control amplifier located at the output side of the interference signal elimination means.
